# EUROPÄISCHE PATENTSCHRIFT

(11) **EP 1 954 642 B1**
(45) Veröffentlichungstag und Bekanntmachung des Hinweises auf die Patenterteilung: **01.04.2009**
(21) Anmeldenummer: 06707589.5
(22) Anmeldetag: 16.03.2006
(51) Int. Cl.: C03C 21/00, B65B 1/10, C03C 15/00, C03C 23/00, C03C 17/00

(54) **INNENVERGÜTUNGSVERFAHREN UND -GERÄT ZUR INNENVERGÜTUNG VON GLASBEHÄLTERN**
INTERNAL TREATMENT PROCESS AND DEVICE FOR THE INTERNAL TREATMENT OF GLASS CONTAINERS
PROCEDE ET APPAREIL DE FINITION INTERIEURE POUR LA FINITION INTERIEURE DE RECIPIENTS EN VERRE

(30) Priorität: 30.11.2005 DE 102005057423
(43) Veröffentlichungstag der Anmeldung: 13.08.2008
(73) Patentinhaber: Gerresheimer Essen GmbH, 45279 Essen (DE)
(72) Erfinder: RÖSLER, Siegfried, 45277 Essen (DE)
(74) Vertreter: Kiani, Nassim
(86) Internationale Anmeldenummer: PCT/EP2006/002427
(87) Internationale Veröffentlichungsnummer: WO 2007/062694

(56) Entgegenhaltungen:
- EP-A- 0 022 541
- EP-A- 0 776 829
- GB-A- 531 145
- US-A- 2 046 302
- US-B1- 6 283 176
- US-B1- 6 755 223
- DATABASE WPI Section Ch, Week 198414 Derwent Publications Ltd., London, GB; Class G06, AN 1984-085207 XP002397670 & JP 59 035043 A (JAPAN SYNTHETIC RUBBER CO LTD) 25. Februar 1984 (1984-02-25)

## Beschreibung

Die vorliegende Erfindung betrifft ein Innenvergütungsverfahren und -gerät zur Innenvergütung von Glasbehältern.

Um z.B. Medikamente oder destilliertes Wasser über Jahre in Glasbehältern, vorzugsweise Flaschen aus Hüttenglas lagern zu können, müssen diese Glasbehälter aus Glas der hydrolytischen Klasse 1 (Klasse HC 1 der Norm ISO 4802 oder Typ I der Ph. Eur. 5.0 [Pharmacopoea Europaea Version 5.0]), dort zu Ziff. 3.2.1 oder als nachbehandelte Glasbehälter der sogenannten Klasse 2 (Klasse HC2 der Norm ISO 4802 oder Typ II der Ph. Eur. 5.0) gefertigt sein.

Da Glas der Klasse 1 (HC 1 nach ISO 4802, Typ I nach Ph. Eur. 5.0/3.02.01.00) im Herstellungsprozess sehr kostenintensiv ist, fertigt man die Glasbehälter aus Glas der Klasse 3 (HC 3 nach ISO 4802, Typ III nach Ph. Eur. 5.0/3.02.01.00) und behandelt die Innenoberfläche dieser Behälter, um die Werte der Klasse 2 (HC 2 nach ISO 4802, Typ II nach Ph. Eur. 5.0/3.02.01.00) zu erreichen.

Die Behandlung der Innenoberfläche zielt dabei darauf ab, dem Glas an der Oberfläche, vorzugsweise der Innenoberfläche eines Glasbehälters das Natrium zu entziehen und so den Gehalt an Kationen zu senken, um es hydrolytisch widerstandsfähiger zu machen. Es gibt verschiedene Verfahren, um diese sogenannte Innenvergütung durchzuführen.

So werden in Glashütten schon seit den 1960er Jahren Ammoniumchlorid-Tabletten zu diesem Innenvergütungsverfahren verwendet. Die Tabletten im Durchmesser von vorzugsweise ca. 7 mm und vorzugsweise einer Dicke von ca. 2,5 mm u. 0,15 gr. Gewicht wurden früher von Hand in die einzelnen ca. 600°C heißen Glasbehälter geworfen, das Vergütungsmittel (hier das Ammoniumchlorid) verdampft dann infolge der Hitzeeinwirkung und schlägt sich als Vergütung an den Flächen des Innenraumes des Glasbehälters nieder.

Seit geraumer Zeit werden auch Maschinen, sogenannte Tablettenwerfer, hierzu eingesetzt. Mit steigender Leistungserhöhung der Flaschen-Produktionsmaschinen, selbst durch Einwurf von zwei Tabletten je Flasche, kann die fehlerfreie Innenvergütung jedoch auch hiermit nicht immer gewährleistet werden.

Der Preis dieser Ammoniumchlorid-Tabletten war und ist sehr hoch, so betrug er 1985 ca. 40,- DM je kg; ein Niveau, das in etwa auch heute noch gilt. Der Verbrauch etwa für 50 ml Infusionsflaschen beträgt bei einer Schnittzahl von 150 Flaschen / Min. = 300 Tabletten / Min. von je 0,15 gr. Gewicht (bei 2 Tabletten je Flasche zur Erhöhung der Vergütungssicherheit). Dies entspricht ca. 64,8 kg / 24 Stunden. Diese Tablettenvergütung ist somit sehr teuer, trotzdem aber bedauerlicherweise nicht sicher genug, da selbst bei doppeltem Tablettenwurf nicht immer sichergestellt werden kann, daß diese auch tatsächlich durch die Glasbehältermündung in den Innenraum eines jeden Glasbehälters hinein gelangen. Reklamationen und damit zusätzliche Kosten für den Glasproduzenten sind die Folge.

Dieses Vergütungsverfahren weist somit den Nachteil sehr hoher Kosten bei gleichzeitig nicht immer ausreichend sichergestellter Qualität auf.

Um auch kleine Glasbehälter mit einem kleinen Mündungsinnendurchmesser (also auch solche mit kleiner Flaschenöffnung) innenvergüten zu können, kann auch Ammoniumchlorid als"Pulver" eingesetzt werden. Die heißen Glasbehälter werden dabei am Produktionsmaschinenband auf ein kleines angeflanschtes mitlaufendes Band umgeleitet, darüber wird dann mittels etwa eines Schneckenförderers ein ständiger Strahl Ammoniumchlorid-Pulver gerieselt.

Die Qualität der Innenvergütung solcher Glasbehälter ist zwar ausreichend, liegt aber an der unteren Grenze. Zudem ist der Produktionsablauf mit sehr viel Staub bzw. Schmutz verbunden und daher nur sehr schlecht zu praktizieren.

Aus den vorgenannten Gründen wird daher ein weiteres Verfahren zur Innenvergütung angewandt Die Glasbehälter werden in einen sogenannten Kühlofen verbracht, dessen gegenüber der Umgebung abgedichtete Innenatmosphäre mit einem Gas eines Vergütungsmittels versetzt wird, das nicht das teure Ammoniumchlorid sein muß, welches für die Tablettenform benötigt wird (preisgünstigere Vergütungsmittel, wie etwa Ammoniumsulfat, das stark hygroskopisch ist, eignen sich nicht zur Herstellung von Tabletten). Das Vergütungsmittel schlägt sich sodann auf der Oberfläche der im Innenraum des Kühlofens befindlichen Glasbehälter nieder und vergütet diese so in ausreichender Qualität (innen und außen).

Bei diesem Verfahren kann so zwat der Einsatz der teuren Ammoniumchlorid-Tabletten gemieden und eine austeichende Vergütungsqualität erzielt werden, jedoch hat es den Nachteil, äußerst unflexibel hinsichtlich der geeigneten Vergütungschargengrößen zu sein, da der hierzu eingesetzte Kühlofen nur für zu vergütende Glasbehälter verwendet werden kann, da sich das Vergütungsmittel überall im Inneren des Ofens niederschlägt und somit für Chargen ohne gewünschte Vergütung nicht mehr verwendet werden kann. Damit ist es jedoch unter wirtschaftlichen Gesichtspunkten notwendig den entsprechenden kapitalintensiven Ofen allein mit zu vergütenden Behälterglaschargen auszulasten. Ein Einsatz dieses Vergütungsvefabrens scheidet somit für kleinere Chargen aus. Zudem hat das Verfahren auch den Nachteil, immer den gesamten Glasbehälter und nicht nur seinen Innenraum zu vergüten.

Die Patentschrift GB 531 145 offenbart ein Gerät zur Innenvergütung von Glasbehältern, bei dem Ammoniumsulfat-Tabletten oder Pellets mittels einer rotierenden Scheibe in die heißen Glasbehälter eingeworfen werden.

Die Patentschrift US 2 046 302 offenbart ein ähnliches Innenvergütungsgerät, das schwefelhaltige Pellets zur Innenvergütung verwendet.

Eine Methode, die die vorgenannten Nachteile alle vermeidet, ist trotz der offenkundigen wirtschaftlichen und/oder technischen Nachteile aller bekannten Vergütungsverfahren seit Jahrzehnten nicht bekannt. Vielmehr sind die bekannten Methoden entweder teuer, unsicher oder inflexibel im Hinblick auf kleinere Chargen.

Vor diesem Hintergrund des Standes der Technik ist es Aufgabe der vorliegenden Erfindung ein Innenvergütungsgerät anzugeben, dass die vorgenannten Nachteile vermeidet, mithin eine sichere Innenvergütung gewährleistet, den gezielten Einsatz eines kostengünstigen Vergütungsmittels erlaubt und auch für kleinere Chargen wirtschaftlich einsetzbar ist.

Der Lösung der Aufgabe dientein ein Innenvergütungsgerät zur Innenvergütung von 350°C bis 600°C heißen Glasbehältern gemäß Patent anspruch 1.

Mit der erfindungsgemäßen Vorrichtung kann
- ein rieselfähiges, etwa ein körniges, vorzugsweise granulatartig oder pulverförmig vorliegendes Vergütungsmittel, besonders bevorzugterweise Ammoniumsulfat, entsprechend der Größe des zu vergütenden Glasbehältnisses portioniert und
- eine so gebildete Portion mittels eines Portionsförderers durch die Glasbehältermündung in den noch heißen, Glasbehälterinnenraum befördert werden.

Unter einem noch heißen Glasbehälterinnenraum ist dabei ein solcher zu verstehen, bei dem die Temperatur noch so hoch ist, daß das Einbringen des Vergütungsmittels noch zu einer Vergütung der Glasoberfläche im Glasbehälterinnenraum führt. Im Falle der Verwendung von Ammoniumsulfat als Vergütungsmittel muß die Temperatur so bemessen sein, daß es zu einer Reaktion kommt, bei der das Ammoniumsulfat das Natrium in der Glasoberfläche des Behälterinnenraumes reduziert, was dort zu weniger Kationen führt und auf diese Weise das Glas vergütet, wobei Ammoniumbisulfar und Ammoniak entstehen. Ob eine solche Reaktion in einem zur Vergütung hinreichendem Maße ablaufen kann, ist dabei insbesondere von der Temperatur des Glasbehälters zum Zeitpunkt der Einbringung des Vergütungsmittels in den Glasbehälter und der Zeit abhängig, die anschließend noch zur Abkühlung zur Verfügung steht. Im Falle der Einbringung bei niedrigerer Temperatur bedarf es einer längeren anschließenden Abkühl-Zeitspanne im Falle höherer Temperatur einer kürzeren Zeitspanne. Gleiches gilt für die etwaige Verwendung anderer Vergütungsmittel als Ammoniumsulfat.

Besonders gute Ergebnisse der Vergütung wurden mit Ammoniumsulfat in einem Bereich von ca. 350°C - ca. 500°C, vorzugsweise 350 °C bis 500 °C, für die Glasbehältertemperatur erzielt. Auch bei höheren Temperaturen um ca. 600 °C, vorzugsweise bei 600 °C, kann mit zufriedenstellenden Ergebnissen gearbeitet werden. Als Abkühlzeit bis auf eine Temperatur von ca. 80 °C, vorzugsweise von 80°C, stand dabei jeweils eine Zeitspanne von etwa einer Stunde (1 h), vorzugsweise eine Stunde, zur Verfügung.

Die Ankunft eines Glasbehälters kann mittels geeigneter Detektionsmittel, wie etwa lichtschranken oder anderer Nähetungssensoren, etwa an einem Förderband festgestellt werden. Die durch das Detektionsmittel dabei ausgelöste erforderliche Synchronisation zwischen Portionsförderer und Glasbehälter kann taktweise, etwa durch eine Schrittsteuerung realisiert werden. Hierbei ermittelt man z.B. die Zeit, die zwischen Detektion des Glasbehälters - etwa auf einem Förderband mit konstanter oder zu messender Geschwindigkeit (zu messen z.B. mittels eines Drehwinkelgebers auf einer Antriebsachse des Bandes) - und dem zu treffenden Befüllzeitpunkt - etwa dann, wenn der Glasbehälter sich möglichst genau unterhalb des Portionsförderers befindet - vergehen muß, sowie die Zeit, die der Portionsförderer bis zur jeweils nächste Entleerung benötigt und richtet die Taktsteuerung - etwa mittels eines entsprechend eingestellten Verzögerungsgliedes - dann so ein, daß der Portionsförderer immer erst dann entleert, wenn der Glasbehälter nach vorheriger Detektion so in Position gelangt ist, daß das Vergütungsmittel auch in seinen Innenraum befördert werden kann, also z.B. in ihn hineinrieseln kann. Statt einer solchen taktweisen Steuerung kommt aber auch jedwede andere Steuerung oder Regelung infrage, die den Entleerungszeitpunkt geeignet synchronisiert, also etwa eine elektronische Geschwindigkeitsregelung von Portionsförderer und/oder Förderband mit z.B. einer elektronischer Synchronisation (sogenannte elektronische Welle). Vorzugsweise wird man die Position der Detektion des Glasbehälters ein Stück vor der eigentlichen Entleerungsstelle wählen, um für die vorbeschriebene - gleich auf welche Art durchgeführte - Synchronisation genügend Zeit zur Verfügung zu haben.

In einer bevorzugten Ausführungsform des Innenvergütungsgeräts nach der vorliegenden Erfindung dient der Portionsförderer, vorzugsweise eine als solcher fungierende Förderscheibe, nicht nur der Portionsförderung in den Innenraum des Glasbehälters, sondern selbst auch der Portionierung, also etwa der Zusammenstellung einer Portion bestimmter Größe, des Vergütungsmittels. Dies kann dadurch geschehen, daß das jeweilige zu befüllende Portionsbehälmis entsprechend der Größe des zu vergütenden Glasbehältnisses bemessen ist und an einer Aufnahmestelle, vorzugsweise unter einem Einfülltrichter und/oder einem - vorzugsweise trichterförmigen - Einfüllkanal, das Vergütungsmittel bis zu seiner maximalen Füllmenge aufnimmt. Im Falle der Verwendung einer Förderscheibe wird die Aufnahme etwa durch einen Abstreifer knapp über der Oberkante (Abstand vorzugsweise kleiner als die Korngröße des Vergütungsmittels) und damit entsprechend der Füllkapazität des Portionsbehältnisses begrenzt, wenn die Förderscheibe das zur Aufnahme bereite Portionsbehältnis an der Aufnahmestelle vorbei dreht, indem der Abstreifer das hierbei etwaig zuviel anfallende Vergütungsmittel infolge der Drehung der Förderscheibe, vorzugsweise zumindest auch über eine Rinne, etwa in einen Sammler, vorzugsweise zu einer Fördereinrichtung zur Wiederzuführung in den Materialkreislauf abstreift. Die Rinne kann dabei bevorzugterweise auch aus dem Abstreifer selbst gebildet sein, indem er etwa in seinem Verlauf rinnenförmig ausgebildet wird.

In einer besonders bevorzugten Ausführungsform weist die Förderscheibe auf ihrem Kreisumfang oder parallel hierzu, vorzugsweise in gleichen Bogenabständen, angeordnete Portionsbehältnisse auf, so daß zur gleichen Zeit eines der Portionsbehältnisse an der Aufnahmestelle befüllt und ein anderes in den gerade zu vergütenden Glasbehälter entleert wird. Darüber hinaus werden vorzugsweise zur gleichen Zeit mehrere Portionsbehältnisse in leerem Zustand von der Vergütungsmittelentleerung in den Glasbehälter in Richtung der Aufnahmestelle und befüllte Portionsbehältnisse von der Aufnahmestelle in Richtung der Vergütungsmittelentleerung in den Glasbehälter befördert.

In einer weiteren besonders bevorzugten Ausführungsform nach der vorliegenden Erfindung ist die Förderscheibe als, vorzugsweise aufrecht stehendes, Dosierrad mit in den Radumfang eingelassenen Portionsbehältnissen ausgestaltet.

Das vorstehend beschriebene erfindungsgemäße Innenvergütensgerät kann einzeln oder zur Erhöhung der Vergütungssicherheit auch in Serie zwei- oder mehrfach in der Glasproduktion am Förderband hintereinander angeordnet sein und so ein Innenvergütungssystem bilden, wobei sich im Falle der Verwendung zweier hintereinander angeordneter erfindungsgemäßer Innenvergütungsgeräte deren Förderscheiben vorzugsweise gegenläufig zueinander drehen, was es dann vorteilhafterweise ermöglicht, jeweils Abstreifer so anzuordnen, daß diese das überschüssige Vergütungsmittel in einen gemeinsamen, vorzugsweise in der Mitte, zwischen den beiden Geräten angeordneten Sammler, vorzugsweise zur Wiederzuführung in den Materialkreislauf, abstreifen.

Das erfindungsgemäße Innenvergütungsgerät ist vorzugsweise für noch heiße (ca. 350°C - ca. 500°C, aber auch bis ca. 600 °C) Glasbehälter vorgesehen.

Mit der vorliegenden Erfindung wird eine gute Innenvergütung sichergestellt, bei der gleich nach dem Herstellen der Glasbehälter im Durchlauf-Verfahren auf dem Maschinenband ein genau dosiertes Mittel in die Behälter gegeben werden kann. Die richtige und konstante Vergütungsmittelzugabe kann hier für den Erfolg der Innenvergütungsmethode gewährleistet werden.

Das Gerät nach der vorliegenden Erfindung stellt eine im rauhen Glashütteubetrieb verwendbare Erfindung dar, mit der man u.a. eine preisgünstige und zugleich auch für kleine Fertigungslose wirtschaftliche Innenvergütung von Glasbehältern mit gutem Erfolg durchführen kann. Das bevorzugt zum Einsatz kommende Vergütungsmittel ist Ammoniumsulfat, technisch in Kristall-Form vorliegend. Ammoniumsulfat ist kein gefährlicher Stoff im Sinne des deutschen Chemikaliengesetzes. Der Preis für dieses Material liegt z. Zt. bei ca. 0,30 € /kg.

Mit der vorliegenden Erfindung kann eine dosierte Menge Vergütungsmittel (auch Klein- und Kleinstmengen) in rieselfähigem, etwa körnigem Zustand jedem einzelnen Glasbehälter im freien Durchlauf (ohne Berühtung) zugegeben werden.

Die erfindungsgemäße Vorrichtung kann im Falle ihrer Ausführung als mobile geschlossene Einheit an jede vorbereitete Produktionslinie gestellt werden. Die Leistung der Vorrichtung (des Gerätes) beträgt vorzugsweise ca. 600 Flaschen pro Minute. Auch ist ein leichtes Einstellen bei Artikel-Wechsel möglich: Die Dosiermenge kann vorzugsweise durch einfaches Auswechseln der Förderscheibe, etwa des jeweiligen Dosierrades mit neuem/neuen Portionsbehälter(n) und neuer Größe leicht geändert werden.

Im folgenden werden nicht einschränkend zu verstehende Ausführungsbeispiele anhand der Zeichnung besprochen. In dieser zeigt:
- Fig **1**: eine Ausfürungsform eines esfindungsgemäßen Innenvergütungsgerätes in Prinzip- darstellung von der Frontseite her,
- Fig. **2**: ein vergrößertes Detail aus der Darstellung nach Fig. 1 im Bereich der Aufnahmestelle an der Oberkante der Förderscheibe,
- Fig. **3**: ebenfalls ein vergrößertes Detail aus der Darstellung nach Fig. 1, hier im Bereich der Entleerungsstelle an der Unterkante der Förderscheibe,
- Fig. **4**: eine Prinzipdarstellung in Frontansicht eines erfindungsgemäßen Innenvergütungsy- sterns mit zwei Innenvergütungsgeräten, die in Serie in der Glasproduktion am För- derband hintereinander angeordnet sind, jeweils Abstreifer aufweisend, welche das überschüssige Vergütungsmittel in einen gemeinsamen Sammler, vorzugsweise zur Wiederzuführung in den Materialkreislauf abstreifen und deren Förderräder gegenläu- fig zueinander drehen, und
- Fig. **5**: eine Ausführungsform einer kreisrunden Förderscheibe nach der vorliegenden Erfin- dung als aufrecht stehendes Dosierrad mit in den Radumfang eingelassenen Portions- behältnissen in perspektivischer Seitenansicht.

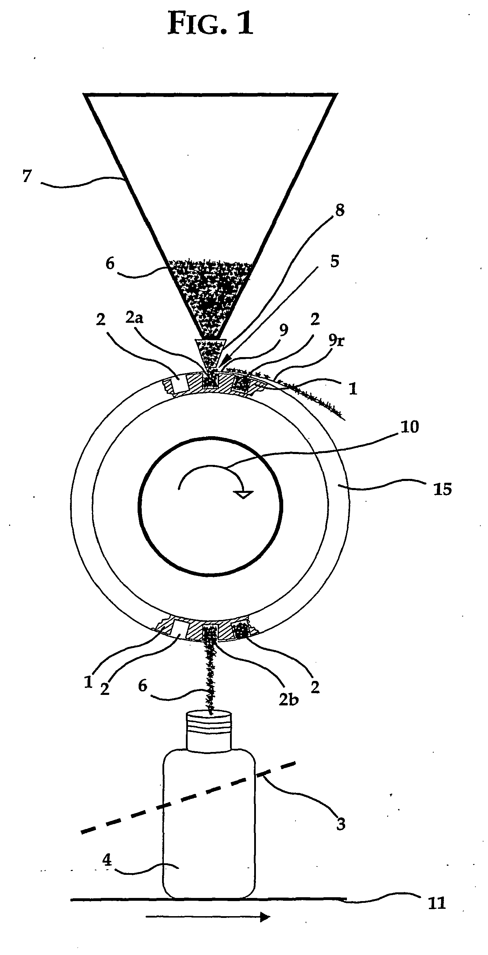

Fig. **1** zeigt eine Ausführungsform eines erfindungsgemäßen Innenvergütungsgerätes in Prinzipdarstellung von der Frontseite her. Aufgrund ihrer Natur als Prinzipdarstellung stimmen die hier zu sehenden Größenverhältnisse der Bauteile nicht unbedingt mit den tatsächlichen Größenverhältnissen überein, was auch für die anderen hier dargestellten Figuren gilt. Das hier zu sehende Innenvergütungsgerät weist einen Portionsförderer **1** auf, der als Förderscheibe mit Portionsbehältnissen **2, 2a, 2b** ausgestaltet ist, bei dem jeweils im Falle einer durch ein Detektionsmittel **3,** hier eine Lichtschranke, festgestellten Ankunft eines Glasbehälters **4** auf einem Förderband **11** im Bereich unterhalb der Förderscheibe **1** durch Drehung derselben ein Portionsbehältnis **2, 2a, 2b** in den Glasbehälter **4** entleert wird. Hierzu sind die Portionsbehältnisse **2, 2a, 2b** auf dem Kreisumfang der Förderscheibe **1 -** vorzugsweise in gleichen Bogenabständen - angeordnet, wodurch zur gleichen Zeit eines der Portionsbehältnisse **2a** an der Aufnahmestelle **5** befüllt und ein anderes Portionsbehältnis **2b** in den gerade zu vergütenden Glasbehälter **4** entleert wird. Die kreisrunde Förderscheibe **1** ist dabei als aufrecht stehendes Dosierrad ausgestaltet, bei dem die Portionsbehältnisse **2, 2a, 2b** in den Radumfang, etwa als Sacklochbohrungen, eingelassenen sind und das sich in einer Einfassung **15,** etwa einem Gehäuse wie hier, dreht. Die Einfassung **15** weist dabei an der Aufnahmestelle **5** und unten, wo Portionsbehältnisse **2b** jeweils entleert werden, Öffnungen zur Aufnahmestelle **5** hin und zum Entleeren, vorzugsweise nach oben bzw. unten, wie hier, auf, damit hier das Vergütungsmittel **6** hindurchtreten kann. In der Darstellung sind daher auch nicht alle Teile des Dosierrades **1** zu sehen. Lediglich die schraffierten, d.h. in der Darstellung zu Erkennbarkeit der Funktion dort zeichnerisch 'aufgerissenen' Teile der Einfassung **15** lassen das dahinterliegende Rad **1** und seine Portionsbehältnisse **2, 2a, 2b** in teils mit Vergütungsmittel **6** befülltem, teils unbefülltem Zustand erkennen.

Die hier als Dosierrad ausgebildete runde Förderscheibe **1** dient vorliegend nicht nur der Portionsförderung in den Innenraum des Glasbehälters **4,** sondern selbst auch der Portionierung des Vergütungsmittels **6.**

Dies wird dadurch erreicht, daß das jeweilige zu befüllende Portionsbehältnis **2a** entsprechend der Größe des zu vergütenden Glasbehältnisses **4** bemessen ist und an einer Aufnahmestelle **5,** vorzugsweise unter einem Einfülltrichter **7** und einem - hier vorzugsweise ebenfalls trichterförmigen - Einfüllkanal **8,** das Vergütungsmittel **6** bis zu seiner maximalen Füllmenge aufnimmt.

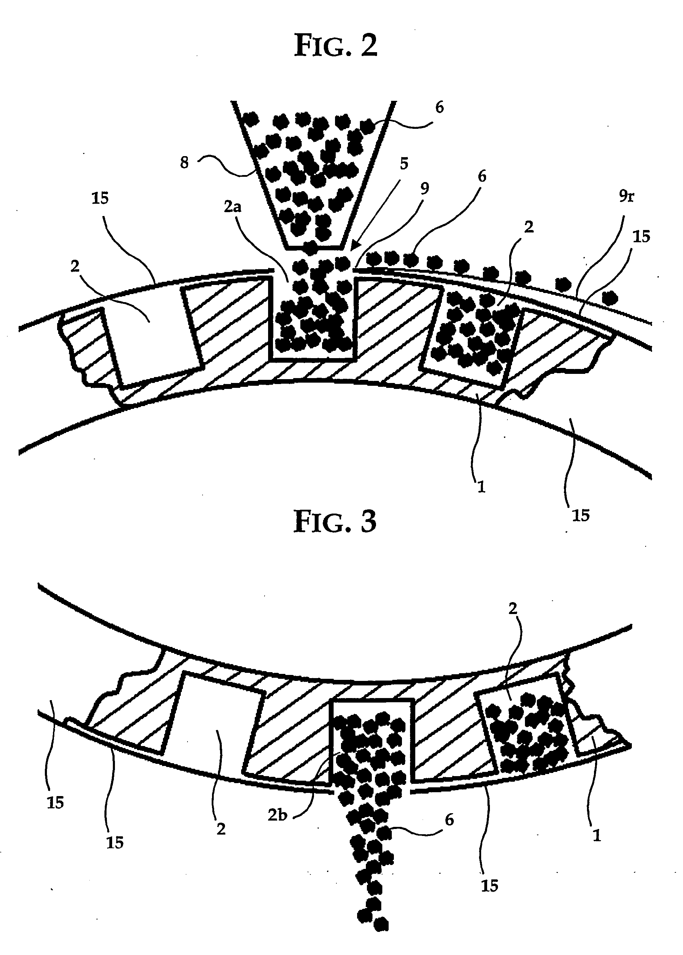

Die Aufnahme des Vergütungsmittels **6** in das jeweilige Portionsbehältnis **2a** an der Aufnahmestelle **5** wird hier zudem durch einen Abstreifer **9** knapp über der Höhe der Oberkante der Förderscheibe **1** und damit entsprechend der Füllkapazität des Portionsbehältnisses **2a** begrenzt, wenn die Förderscheibe **1** das zur Aufnahme bereite Portionsbehältnis **2a** an der Aufnahmestelle **5** vorbei dreht, indem der Abstreifer **9** das hierbei etwaig zuviel anfallende Vergütungsmittel **6** infolge der Drehung **10** der Förderscheibe **1** über eine, hier durch ihn selbst in seinem Verlauf gebildete, Rinne **9r,** vorzugsweise in Richtung eines Sammlers, etwa zur Wiederverwertung abstreift. Der Abstand zwischen der Höhe der Oberkante des die Förderscheibe bildenden Dosierrades **1** und dem Abstreifer **9** ist dabei so gewählt, daß er kleiner als die Korngröße - etwa die durchschnittliche Korngröße, bevorzugterweise die kleinste vorkommende Korngröße - des verwendeten Vergütungsmittels **6** bemessen ist. Vorliegend fällt der Abstreifer **9** mit seinem Ende mit der Kante der oberen Öffnung der Einfassung **15** im spitzen Winkel zusammen, wodurch sich ein Keil bildet, der die überschüssigen Teilchen des Vergütungsmittels **6** besonders gut abstreift, wobei wegen der Details ergänzend insbesondere auch auf die nachfolgende Fig. 2 verwiesen sei, die eine vom Maßstab her größere Darstellung der Einzelheiten erlaubt. Vorzugsweise sind hier Abstreifer **9** und Einfassung **15** in ihrer zusammenfallenden Linie fest miteinander verbunden, etwa indem sie geschweißt oder geklebt oder auch aus einem Stück gefertigt sind.

Der Abstreifer **9** streift das überschüssige Vergütungsmittel **6** hier über eine Rinne **9r,** die er in seinem weiteren Verlauf hier selbst ausbildet, in einen - hier nicht zu sehenden - Sammler ab, der vorzugsweise der Wiederzuführung in den Materialkreislauf dient, wobei anzumerken ist, daß - insbesondere hierzu - das erfindungsgemäße Innenvergütungsgerät neben dem Einfülltrichter **7** auch noch weitere Vorratsbehälter, wie etwa einen größeren Vorratstrichter (hier nicht zu sehen) aufweisen kann.

Fig. **2** zeigt ein vergrößertes Detail aus der Darstellung nach Fig. 1 im Bereich der Aufnahmestelle **5** an der Oberkante der Förderscheibe **1.** Die verwendeten Bezugszeichen entsprechen dabei der Beschreibung aus Fig. 1, auf die auch hinsichtlich der weiteren Beschreibung verwiesen sei.

Fig. **3** zeigt ein vergrößertes Detail aus der Darstellung nach Fig. 1, hier im Bereich der Entleerungsstelle an der Unterkante der Förderscheibe **1.** Die verwendeten Bezugszeichen entsprechen dabei der Beschreibung aus Fig. 1. Auch hier sei wegen der weiteren Beschreibung auf Fig. 1 verwiesen.

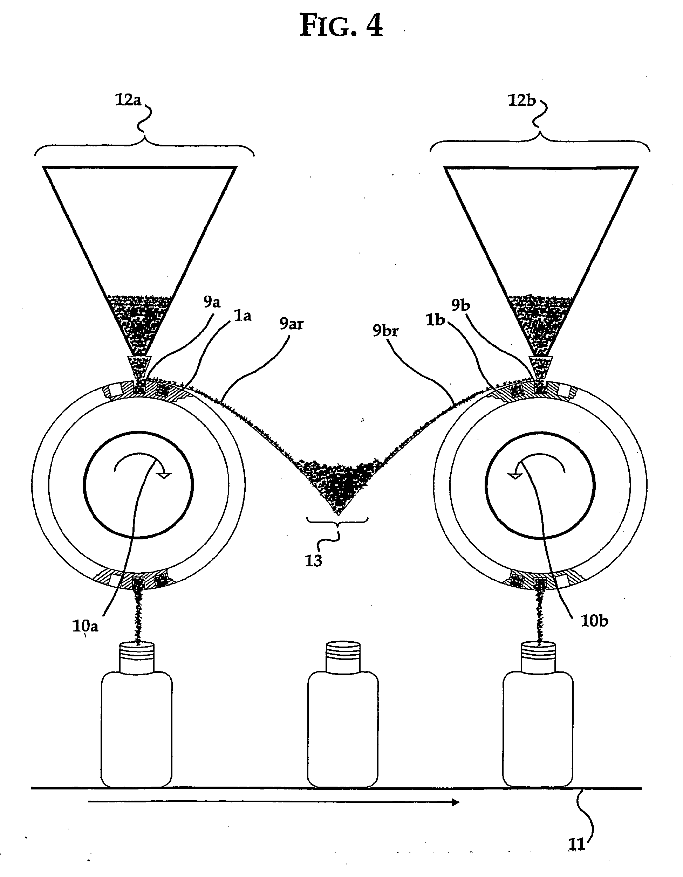

Fig. **4** zeigt in Prinzipdarstellung in Frontansicht ein erfindungsgemäßes Innenvergütungsystem mit zwei Innenvergütensgeräten **12a, 12b** die in Serie in der Glasproduktion am Förderband **11** hintereinander angeordnet sind und die jeweils Abstreifer **9a, 9b** aufweisen, welche über eine Rinne **9ar, 9br** das überschüssige Vergütungsmittel in einen gemeinsamen Sammler **13,** vorzugsweise zur Wiederzuführung in den Materialkreislauf abstreifen und deren Förderräder **1a, 1b** sich gegenläufig zueinander drehen **10a, 10b.**

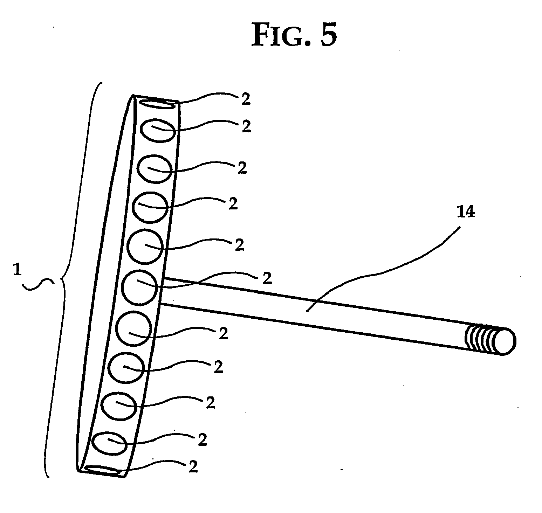

Fig. **5** zeigt eine Ausführungsform des Portionsförderers in Gestalt einer kreisrunden Förderscheibe **1** nach der vorliegenden Erfindung als aufrecht stehendes Dosierrad mit in den Radumfang eingelassenen Portionsbehältnissen **2** in perspektivischer Seitenansicht, wobei das Dosierrad **1** hier eine Achse **14** mit Gewinde am Ende aufweist Das Gewinde dient dabei der Befestigung der Achse auf einem Antrieb durch Einschrauben. Die Achse kann aber auch als Steckachse, vorzugsweise mit einem Bajonettverschluß, ausgebildet sein, wobei sie mittels eines am Ende der Achse **14** befindlichen Steckprofils noch leichter ausgewechselt werden kann. In jedem Falle können erfindungsgemäße Innenvergütungsgeräte oder -systeme durch derartige auswechselbare, als Förderscheibe dienende unterschiedliche Dosierräder **1,** deren Portionsbehältnisse **2** für verschiedene Glasbehältnisgrößen ausgelegt sind, leicht entsprechend den Bedürfnissen der Produktion unterschiedlich großer Glasbehälter angepaßt werden.

## Patentansprüche

1. Innenvergütungsgerät zur Innenvergütung von 350°C bis 600 °C heißen Glasbehältern **(4)** mit zumindest einem Portionsförderer **(1),** der zumindest ein Portionsbehältnis **(2, 2a, 2b)** aufweist, wobei jeweils im Falle einer durch ein Detektionsmittel (**3**) festgestellten Ankunft eines Glasbehälters **(4)** im Bereich unterhalb des Portionsförderers **(1)** ein rieselfähiges Vergütungsmittel in den Glasbehälter **(4)** entleert wird und wobei der Portionsförderer (**1**) nicht nur der Portionsförderung in den Innenraum des Glasbehälters **(4),** sondern selbst auch der Portionierung des Vergütungsmittels (**6**) dient.

2. Innenvergütungsgerät zur Innenvergütung von heißen Glasbehältern **(4)** nach Anspruch **1**, **dadurch gekennzeichnet, daß** als Detektionsmittel **(3)** eine Lichtschranke verwendet wird, die die Ankunft des Glasbehälters **(4)** auf einem Förderband **(11)** im Bereich des Portionsförderers (**1**) feststellt.

3. Innenvergütungsgerät zur Innenvergütung von heißen Glasbehältern (**4**) nach Anspruch 1 oder 2, **dadurch gekennzeichnet, daß** das jeweilige zu befüllende Portionsbehältnis **(2a)** entsprechend der Größe des zu vergütenden Glasbehältnisses **(4)** bemessen ist und an einer Aufnahmestelle (**5**), vorzugsweise unter einem Einfülltrichter (**7**) und/oder einem Einfüllkanal **(8),** das Vergütungsmittel (**6**) bis zu seiner maximalen Füllmenge aufnimmt.

4. Innenvergütungsgerät zur Innenvergütung von heißen Glasbehältern **(4)** nach einem der Ansprüche 1 bis 3, **dadurch gekennzeichnet, daß** der Portionsförderer **(1)** als Förderscheibe mit zumindest einem Portionsbehältnis (**2, 2a, 2b)** ausgestaltet ist, das jeweils im Falle einer durch ein Detektionsmittel (**3**) festgestellten Ankunft eines Glasbehälters (**4**) im Bereich, vorzugsweise unterhalb, der Förderscheibe (**1**) durch Drehung (**10**) derselben in den Glasbehälter (4) entleert wird.

5. Innenvergütungsgerät zur Innenvergütung von heißen Glasbehältern (**4**) nach Anspruch 4, **dadurch gekennzeichnet, daß** die Förderscheibe (**1**) kreisrund ausgestaltet ist.

6. Innenvergütungsgerät zur Innenvergütung von heißen Glasbehältern (**4**) nach Anspruch 4 oder 5. **dadurch gekennzeichnet, daß** das jeweilige zu befüllende Portionsbehältnis (**2a**) das Vergütungsmittel (**6**) an einer Aufnahmestelle (**5**), vorzugsweise unter einem Einfülltrichter (**7**) und/oder einem Einfüllkanal (8), aufnimmt und die Aufnahme durch einen Abstreifer (**9**) über der Oberkante der Förderscheibe **(1)** und damit entsprechend der Füllkapazität des Portionsbehälmisses (**2a**) begrenzt wird, wenn die Förderscheibe (**1**) das zur Aufnahme bereite Portionsbehältnis (**2a**) an der Aufnahmestelle (**5**) vorbei dreht (**10**), indem der Abstreifer (**9**) das hierbei etwaig zuviel anfallende Vergütungsmittel (**6**) infolge der Drehung (**10**) der Förderscheibe (**1**) abstreift.

7. Innenvergütungsgerät zur Innenvergütung von heißen Glasbehältern (**4**) nach Anspruch 6, **dadurch gekennzeichnet, daß** als Abstand zwischen der Oberkante der Förderscheibe (**1**) und dem Abstreifer (**9**) ein solcher gewählt ist, der kleiner als die Korngröße des verwendeten Vergütungsmittels (**6**) bemessen ist.

8. Innenvergütungsgerät zur Innenvergütung von heißen Glasbehältern (**4**) nach Anspruch 6 oder 7, **dadurch gekennzeichnet, daß** der Abstreifer (**9**) das überschüssige Vergütungsmittel (**6**), vorzugsweise über eine Rinne (**9r**), in einen Sammler (**13**) abstreift.

9. Innenvergütungsgerät zur Innenvergütung von heißen Glasbehältern (**4**) nach einem der Ansprüche 4 bis 8, **dadurch gekennzeichnet, daß** die Förderscheibe **(1)** mehrere Portionsbehältnisse (**2, 2a, 2b**) auf ihrem Kreisumfang oder parallel hierzu, vorzugsweise in gleichen Bogenabständen, derart angeordnet aufweist, daß zur gleichen Zeit eines der Portionsbehältnisse (**2a**) an der Aurhahmestelle (**5**) befüllt und ein anderes Portionsbehältnis (**2b**) in den gerade zu vergütenden Glasbehälter (**4**) entleert wird.

10. Innenvetgutungsgerät zur Innenvergütung von heißen Glasbehältern (**4**) nach einem der Ansprüche 4 bis 9, **dadurch gekennzeichnet, daß** die Förderscheibe **(1)** als aufrecht stehendes Dosierrad mit in den Radumfang eingelassenen Portionsbehältnissen (**2, 2a, 2b**) ausgestaltet ist.

11. Innenvergütungsystem aus mindestens zwei Innenvergütungsgetäten (**12a, 12b**) jeweils nach einem der Ansprüche 1 bis 10, **dadurch gekennzeichnet, daß** die Innenvergütensgeräte (**12a, 12b**) in Serie in der Glasproduktion am Förderband (**11**) hintereinander angeordnet sind.

12. Innenvergütungsystem nach Anspruch 11, **dadurch gekennzeichnet, daß** zwei Innenvergütungsgeräte (**12a,12b**) in Serie in der Glasproduktion am Förderband (**11**) hintereinander angeordnet sind und ihre Förderscheiben (**1a, 1b**) gegenläufig zueinander drehen (**10a**, **10b**),

13. Inenvergütungsystem nach Anspruch 12, **dadurch gekennzeichnet, daß** beide Innenvergütungsgeräte (**12a, 12b**), die in Serie in der Glasproduktion am Förderband (**11**) hintereinander angeordnet sind, jeweils Abstreifer (**9a, 9b**) aufweisen, welche das überschüssige Vergütungsmittel (**6**) in einen gemeinsamen Sammler (**13**), vorzugsweise zur Wiederzuführung in den Materialkreislauf, abstreifen.

## Claims

1. Internal treatment device for the internal treatment of glass containers (4) at a temperature of from 350°C to 600°C, comprising at least one portion feeder (1) which has at least one portion receptacle (2, 2a, 2b), wherein, whenever arrival of a glass container (4) in the region underneath the portion feeder (1) is established by a detection means (3), a free-flowing treatment agent is emptied into the glass container (4), and wherein the portion feeder (1) serves not only for the feeding of portions into the interior of the glass container (4), but even also for the apportioning of the treatment agent (6).

2. Internal treatment device for the internal treatment of hot glass containers (4) according to Claim 1, **characterized in that** a light barrier which establishes the arrival of the glass container (4) on a conveyor belt (11) in the region of the portion feeder (1) is used as the detection means (3).

3. Internal treatment device for the internal treatment of hot glass containers (4) according to Claim 1 or 2, **characterized in that** the respective portion receptacle (2a) to be filled is dimensioned so as to correspond to the size of the glass container (4) to be treated and receives the treatment agent (6) up to its maximum filling amount at a receiving location (5), preferably under a filling hopper (7) and/or a filling duct (8).

4. Internal treatment device for the internal treatment of hot glass containers (4) according to one of Claims 1 to 3, **characterized in that** the portion feeder (1) is designed as a feeder wheel with at least one portion receptacle (2, 2a, 2b), which, whenever arrival of a glass container (4) in the region of, preferably underneath, the feeder wheel (1) is established by a detection means (3), is emptied into the glass container (4) by rotation (10) of the feeder wheel.

5. Internal treatment device for the internal treatment of hot glass containers (4) according to Claim 4, **characterized in that** the feeder wheel (1) is of circular design.

6. Internal treatment device for the internal treatment of hot glass containers (4) according to Claim 4 or 5, **characterized in that** the respective portion receptacle (2a) to be filled receives the treatment agent (6) at a receiving location (5), preferably under a filling hopper (7) and/or a filling duct (8), and the receiving process is limited by a stripper (9) over the upper edge of the feeder wheel (1), and consequently in a way corresponding to the filling capacity of the portion receptacle (2a), when the feeder wheel (1) makes the ready-to-receive portion container (2a) turn past (10) the receiving location (5), **in that** the stripper (9) strips away any excess treatment agent (6) as a result of the rotation (10) of the feeder wheel (1).

7. Internal treatment device for the internal treatment of hot glass containers (4) according to Claim 6, **characterized in that** a distance made less than the grain size of the treatment agent (6) that is used is chosen as the distance between the upper edge of the feeder wheel (1) and the stripper (9).

8. Internal treatment device for the internal treatment of hot glass containers (4) according to Claim 6 or 7, **characterized in that** the stripper (9) strips away the excess treatment agent (6), preferably via a channel (9r), into a collector (13).

9. Internal treatment device for the internal treatment of hot glass containers (4) according to one of Claims 4 to 8, **characterized in that** the feeder wheel (1) has a plurality of portion receptacles (2, 2a, 2b) arranged over its circular circumference or parallel thereto, preferably at equal arcuate intervals, in such a way that one of the portion receptacles (2a) is filled at the receiving location (5) and at the same time another portion receptacle (2b) is emptied into the glass container (4) that is just about to be treated.

10. Internal treatment device for the internal treatment of hot glass containers (4) according to one of Claims 4 to 9, **characterized in that** the feeder wheel (1) is designed as an upright dosing wheel with portion receptacles (2, 2a, 2b) recessed into the circumference of the wheel.

11. Internal treatment system comprising at least two internal treatment devices (12a, 12b) each according to one of Claims 1 to 10, **characterized in that** the internal treatment devices (12a, 12b) are arranged in series one behind the other on the conveyor belt (11) in glass production.

12. Internal treatment system according to Claim 11, **characterized in that** two internal treatment devices (12a, 12b) are arranged in series one behind the other on the conveyor belt (11) in glass production and their feeder wheels (1a, 1b) rotate in opposite directions (10a, 10b).

13. Internal treatment system according to Claim 12, **characterized in that** both internal treatment devices (12a, 12b) that are arranged in series one behind the other on the conveyor belt (11) in glass production respectively have strippers (9a, 9b) which strip away the excess treatment agent (6) into a common collector (13), preferably for feeding back into the circulation of material.

## Revendications

1. Appareil de finition intérieure pour la finition intérieure de récipients en verre (4) chauffés entre 350°C et 600°C, avec au moins un transporteur de portions (1) qui présente au moins un récipient pour portions (2, 2a, 2b), dans lequel, lorsque l'arrivée d'un récipient en verre (4) est détectée par un moyen de détection (3) dans la région en dessous du transporteur de portions (1), un moyen de finition qui coule est versé dans le récipient en verre (4), et dans lequel le transporteur de portions (1) sert non seulement à transporter des portions dans l'espace interne du récipient en verre (4), mais aussi à préportionner le moyen de finition (6).

2. Appareil de finition intérieure pour la finition intérieure de récipients en verre (4) selon la revendication 1, **caractérisé en ce que** l'on utilise comme moyen de détection (3) une barrière lumineuse qui détecte l'arrivée du récipient en verre (4) sur une bande transporteuse (11) dans la région du transporteur de portions (1).

3. Appareil de finition intérieure pour la finition intérieure de récipients en verre (4) selon la revendication 1 ou la revendication 2, **caractérisé en ce que** le récipient pour portions (2a) à remplir dans chaque cas est dimensionné en fonction de la taille du récipient en verre à finir (4) et reçoit le moyen de finition (6) jusqu'à sa capacité de remplissage maximale au niveau d'un emplacement de réception (5), de préférence sous une trémie de remplissage (7) et/ou un canal de remplissage (8).

4. Appareil de finition intérieure pour la finition intérieure de récipients en verre (4) selon l'une quelconque des revendications 1 à 3, **caractérisé en ce que** le transporteur de portions (1) est réalisé sous forme de disque de transport avec au moins un récipient pour portions (2, 2a, 2b), qui, lorsqu'un moyen de détection (3) détecte l'arrivée d'un récipient en verre (4) dans la région, de préférence en dessous, du disque de transport (1), est vidé dans le récipient en verre (4) par rotation (10) du disque de transport.

5. Appareil de finition intérieure pour la finition intérieure de récipients en verre (4) selon la revendication 4, **caractérisé en ce que** le disque de transport (1) a une configuration ronde circulaire.

6. Appareil de finition intérieure pour la finition intérieure de récipients en verre (4) selon la revendication 4 ou 5, **caractérisé en ce que** le récipient pour portions (2a) à remplir dans chaque cas reçoit le moyen de finition (6) en un emplacement de réception (5), de préférence sous une trémie de remplissage (7) et/ou un canal de remplissage (8), et la réception est limitée par un moyen de raclage (9) sur l'arête supérieure du disque de transport (1) et ainsi en fonction de la capacité de remplissage du récipient pour portions (2a), lorsque le disque de transport (1) fait tourner (10) le récipient pour portions (2a) prêt à être rempli devant l'emplacement de réception (5), **en ce que** le dispositif de raclage (9) racle le moyen de finition (6) éventuellement en excès sous l'effet de la rotation (10) du disque de transport (1).

7. Appareil de finition intérieure pour la finition intérieure de récipients en verre (4) selon la revendication 6, **caractérisé en ce que** l'on choisit comme distance entre l'arête supérieure du disque de transport (1) et le dispositif de raclage (9) une distance inférieure à la taille des grains du moyen de finition utilisé (6).

8. Appareil de finition intérieure pour la finition intérieure de récipients en verre (4) selon la revendication 6 ou 7, **caractérisé en ce que** le dispositif de raclage (9) racle le moyen de finition en excès (6), de préférence par le biais d'une rigole (9r), jusque dans un collecteur (13).

9. Appareil de finition intérieure pour la finition intérieure de récipients en verre (4) selon l'une quelconque des revendications 4 à 8, **caractérisé en ce que** le disque de transport (1) présente plusieurs récipients de portions (2, 2a, 2b) disposés sur sa circonférence circulaire ou parallèlement à elle, de préférence à distances d'arc identiques, de telle sorte qu'au même moment, l'un des récipients pour portions (2a) soit rempli à l'emplacement de réception (5) et qu'un autre récipient pour portions (2b) soit vidé dans le récipient en verre (4) à finir.

10. Appareil de finition intérieure pour la finition intérieure de récipients en verre (4) selon l'une quelconque des revendications 4 à 9, **caractérisé en ce que** le disque de transport (1) est réalisé sous forme de roue de dosage debout, avec les récipients pour portions (2, 2a, 2b) incorporés dans la périphérie de la roue.

11. Système de finition intérieure constitué d'au moins deux appareils de finition intérieure (12a, 12b) selon l'une quelconque des revendications 1 à 10, **caractérisé en ce que** les appareils de finition intérieure (12a, 12b) sont disposés en série les uns derrière les autres dans la production de verre sur la bande transporteuse (11).

12. Système de finition intérieure selon la revendication 11, **caractérisé en ce que** deux appareils de finition intérieure (12a, 12b) sont disposés en série l'un derrière l'autre dans la production de verre sur la bande transporteuse (11), et leurs disques de transport (1a, 1b) tournent en sens inverse (10a, 10b) l'un de l'autre.

13. Système de finition intérieure selon la revendication 12, **caractérisé en ce que** les deux appareils de finition intérieure (12a, 12b) qui sont disposés en série dans la production de verre sur la bande transport (11) présentent à chaque fois des dispositifs de raclage (9a, 9b), qui raclent le moyen de finition (6) en excès dans un collecteur commun (13), de préférence pour le réacheminer au circuit de matière.
